# EUROPÄISCHE PATENTSCHRIFT

(11) **EP 0 378 797 B1**
(45) Veröffentlichungstag und Bekanntmachung des Hinweises auf die Patenterteilung: **31.03.1993**
(21) Anmeldenummer: 89122600.3
(22) Anmeldetag: 07.12.1989
(51) Int. Cl.: F01N 3/20, F16K 31/70

(54) **Strömungsleitklappe aus Bimetall, insbesondere für Abgassysteme von Kraftfahrzeugen**
Bimetallic flow guide shutter, especially for the exhaust systems of motor vehicles
Volet bimétallique pour guider l'écoulement, en particulier le système d'échappement des véhicules à moteur

(30) Priorität: 20.12.1988 DE 8815794 U
(43) Veröffentlichungstag der Anmeldung: 25.07.1990
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: Kahlhöfer, Hermann, Dipl.-Phys.

(56) Entgegenhaltungen:
- EP-A- 0 355 489
- DE-A- 2 321 578
- DE-A- 3 122 194
- FR-A- 2 346 812
- US-A- 3 972 685
- US-A- 4 191 326
- PATENT ABSTRACTS OF JAPAN, Band 6, Nr. 213 (M-167)[1091], 26. Oktober 1982;& JP-A-57 119 148 (HITACHI) 24-07-1982
- PATENT ABSTRACTS OF JAPAN, Band 6, Nr. 232 (M-172)[1110], 18. November 1982;& JP-A-57 134 078 (MATSUSHITA) 19-08-1982
- PATENT ABSTRACTS OF JAPAN, Band 4, Nr. 41 (M-5)[523], 29. März 1980;& JP-A 55 12 207 (TOYOTA) 28-01-1980

## Beschreibung

Die vorliegende Erfindung betrifft eine Strömungsleitklappe nach dem Oberbegriff des Anspruchs 1. Insbesondere bei modernen Abgassystemen an Kraftfahrzeugen, die mit Einrichtungen zur Minderung der Schadstoffe ausgerüstet sind, kann sich das Problem stellen, daß die Abgasströmung in Abhängigkeit von der Temperatur über unterschiedliche Wege geleitet werden soll. Beispielsweise gibt es Konzepte, bei denen ein motornah eingebauter, sogenannter Startkatalysator in der Kaltstartphase vom gesamten Abgas durchströmt wird, während er später ganz oder teilweise vom Abgas umgangen wird, um eine Schädigung des Katalysators durch zu hohe Temperaturen zu vermeiden.

Dabei wurde beispielsweise in der US-A-3 972 685 auch schon vorgeschlagen, die temperaturabhängige Führung der Strömung durch Strömungsleitklappen aus einem Bimetall zu bewirken, welche in Abhängigkeit von der Temperatur eine unterschiedliche Lage im Strömungsweg einnehmen. Allerdings ist in dieser Schrift nicht näher beschrieben, welche Materialien und sonstigen konstruktiven Merkmale für solche Bimetallklappen notwendig sind. In der nachveröffentlichten EP-A-0 355 489 ist bereits eine längliche, an einer Schmalseite befestigte Strömungsleitklappe beschrieben, die jedoch nicht zur Verringerung der Schwingungsneigung besonders gestaltet ist. Die dortige Bimetallklappe hat durchgehend die gleiche Dicke.

Die Schwierigkeiten, die sich bei der Realisierung einer solchen großflächigen Strömungsleitklappe ergeben, sind die folgenden:
a) Die Klappe muß aus zwei verschiedenen Metallen bestehen, welche beide über lange Zeiträume den heißen, teilweise chemisch aggressiven und korrosiven Abgasen einer Verbrennungsmaschine standhalten.
b) Die Bimetallklappe muß eine große Zahl von Biegungen unbeschadet und in ihrer Form im wesentlichen unverändert überstehen.
c) Der Bewegungsweg der Klappe muß wenigstens einige Zentimeter betragen, um eine wirksame Strömungsführung zu bewirken. Dies erfordert relativ dünne Bimetallschichten, wodurch wiederum Stabilitätsprobleme auftreten können.
d) Die Klappe ist einem pulsierenden Gasstrom mit relativ hoher Geschwindigkeit ausgesetzt und wird möglicherweise direkt von diesem angeströmt, so daß besondere Anforderungen an die mechanische Stabilität zu stellen sind.
e) Hinzu kommt noch, daß die Bimetallschichten der Klappe sich auch bei längerem Betrieb im Temperaturbereich von 900 oder gar 1000 °C mechanisch nicht verändern sollen, z. B. durch Kriechen oder Rißbildung.

Aufgabe der vorliegenden Erfindung ist es, eine Strömungsleitklappe zu schaffen, welche einen Einsatz unter den obengenannten Anforderungen erlaubt.

Zur Lösung dieser Aufgabe soll die Strömungsleitklappe durch Aufbau und/oder Form und/oder Zusatzteile eine erhöhte Steifigkeit und verringerte Schwingungsneigung aufweisen. Ein übliches Bimetallteil besteht aus mindestens zwei flächig aneinandergefügten Metallschichten. Um in Abhängigkeit von der Temperatur einen genügend großen Biegeweg zu erreichen, dürfen die Schichten nicht zu dick gewählt werden, da der Biegeweg mit zunehmender Schichtdicke der Metallschichten abnimmt. Diese beiden Gegebenheiten führen dazu, daß eine übliche Bimetallklappe mit genügendem Biegeweg in einem Abgasstrom keine genügende Steifigkeit für die Führung einer Strömung aufweisen würde und außerdem nach kurzer Zeit durch nicht zu vermeidende Schwingungen zerstört werden könnte. Dementsprechend ist es notwendig, die Klappe zu versteifen und ihre Schwingungsneigung zu verringern. Dies wurde erreicht mit den Merkmalen des Anspruchs 1.

Unterschiedliche Möglichkeiten zur Erreichung einer größeren Steifigkeit und verringerten Schwingungsneigung sowie weitere vorteilhafte Ausgestaltungen der Erfindung sind in den Ansprüchen 2 bis 20 angegeben. Die Ansprüche 21 und 22 betreffen die spezielle Verwendung einer erfindungsgemäßen Strömungsleitklappe in Abgassystemen, insbesondere bei Umgehungsleitungen von Startkatalysatoren. Wie anhand der Zeichnung noch näher erläutert wird, gibt es verschiedene Möglichkeiten eine Strömungsleitklappe zu versteifen und Schwingungen zu unterdrücken. Gemäß dem Anspruch 1 soll eine erfindungsgemäße Stromungsleitklappe eine langgestreckte Form, vorzugsweise etwa die eines Rechtecks oder Trapezes aufweisen, wobei wegen der Verhältnisse in einem Abgassystem die längste Ausdehnung mindestens 6 cm und die breiteste Ausdehnung mindestens 3 cm betragen sollte. Für viele Anwendungsfälle ist es sogar notwendig, Klappen von noch größerer Länge, beispielsweise 10 bis 20 cm, zu verwenden, um einen genügend großen Biegeweg zu erreichen. Eine Möglichkeit, die Klappe in einem Abgassystem anzubringen, besteht darin, sie an einer Schmalseite zu befestigen und im übrigen frei beweglich zu lassen. Alternativ dazu kann die Klappe auch im Bereich ihres Schwerpunktes befestigt werden, so daß sie zwei frei bewegliche Enden hat, welche beide zur Beeinflussung von Gasströmungen dienen können. Eine besondere Verringerung der Schwingungsneigung und eine Versteifung der Klappe wird dadurch erreicht, daß das (bzw. die) freie(n) Ende(n) der Klappe im Längsschnitt keilförmig gestaltet wird (bzw. werden), indem die einzelnen Metallschichten von den Befestigungsmitteln aus in der Dicke abnehmen und/oder indem mehrere Bimetallstreifen zusammen eine Keilform bilden.

Weiter kann die Klappe durch Anbringung von zusätzlichen Bimetallstreifen verstärkt werden, wobei diese als äußere Lagen und/oder als Zwischenlagen eingesetzt werden können. Wie anhand der Zeichnung näher erläutert wird, ist ein mehrschichtiger Aufbau aus Bimetallstreifen, die untereinander verschiebbar sind, besonders vorteilhaft. Eine aus mehreren Bimetallstreifen zusammengesetzte Klappe erreicht nahezu den gleichen Biegeweg wie die einzelnen Bimetallstreifen, hat jedoch eine Steifigkeit, die der eines Bimetallstreifens mit wesentlich dickeren Einzelschichten entspricht. Zu beachten ist beim Aufeinanderschichten von mehreren Bimetallstreifen, daß diese gegeneinander verschiebbar bleiben müssen, wobei es vorteilhaft ist, am freien Ende der Klappe eine Schiebeverbindung vorzusehen, die beispielsweise durch Umbiegen eines Bimetallstreifens um die anderen erreicht werden kann. Bei der Schichtbauweise der Bimetallklappe können auch die einzelnen Bimetallstreifen unterschiedlich lang sein, so daß sich insgesamt im Längsschnitt keilförmige Klappenenden ergeben. Es sei auch darauf hingewiesen, daß die einzelnen Schichten eines Bimetallstreifens in Abhängigkeit von den darin auftretenden Spannungen unterschiedlich dick sein können.

Die Form einer großflächigen Bimetallklappe ist prinzipiell von der Temperatur abhängig. Dabei kann jedoch durch bestimmte konstruktive Maßnahmen und Vorbehandlungen ein bestimmtes, gewünschtes Formverhalten über einen bestimmten Temperaturbereich erreicht werden. Sind die beiden Metallschichten flächig miteinander verbunden, so findet abhängig vom Verhältnis Länge zu Breite eine Wölbung in Längs-und in Querrichtung statt. Von der Temperatur, bei der die beiden Metallschichten verbunden werden, hängt es außerdem ab, wie die Spannungsverteilung in den beiden Metallschichten bei verschiedenen Temperaturen ist. Bei der vorliegenden Erfindung wird ein Aufbau der Klappe bevorzugt, der zumindest in einem vorgegebenen Temperaturbereich bewirkt, daß die Klappe nahezu eben ist.

Von ganz besonderer Bedeutung für einen Einsatz von Strömungsleitklappen auch bei sehr hoher Temperatur ist es ganz allgemein, daß die Bimetalle bei hoher Temperatur miteinander verbunden werden, so daß die Zug- und Druckspannungen in den Metallschichten bei niedriger Temperatur, z. B. 20 °C oder darunter, ihren höchsten Wert und bei hoher Temperatur, z. B. 800 °C bis 1000 °C, ihren niedrigsten Wert haben, vorzugsweise bei maximaler Betriebstemperatur etwa Null sind. Dies ist deshalb so wichtig, weil die Metallschichten mit zunehmender Temperatur immer weicher werden und Spannungen durch Kriechen ausgleichen würden, so daß eine lange Lebensdauer bei gleichbleibender Form der Klappe nur unter Einhaltung der genannten Bedingungen möglich ist.

Als Materialien für hochbelastete Strömungsleitklappen sind nur wenige Werkstoffe wirklich gut geeignet und in Abgassystemen bei Kraftfahrzeugen bewährt. Im folgenden wird ein Beispiel für eine geeignete Materialpaarung angegeben. Dabei besteht eine der Bimetallschichten aus einem Austenit und die andere der Bimetallschichten aus einem Ferrit oder einem Ferrit-Austenit. Als geeignet hat sich beispielsweise ein Austenit mit der Kurzbezeichnung X 15 CrNiSi 20 12 erwiesen, der etwa 0,10 % Kohlenstoff, 2,0 % Silizium, 0,7 % Mangan, 20 % Chrom und 12 % Nickel enthält (Werkstoff-Nr. 1.4828). Ein geeigneter Ferrit ist beispielweise unter der Kurzbezeichnung X 10 CrAl 18 bekannt mit einer Zusammensetzung von etwa 0,08 % Kohlenstoff, 1,3 % Silizium, 0,7 % Mangan, 18 % Chrom, 1 % Aluminium (Werkstoff-Nr. 1.4742). Außerdem kommt noch ein unter der Bezeichnung X 20 CrNiSi 25 4 bekannter Ferrit-Austenit in Betracht mit einer Zusammensetzung aus etwa 0,18 % Kohlenstoff, 1,2 % Silizium, 0,7 % Mangan, 25 % Chrom und 4 % Nickel (Werkstoff-Nr. 1.4821). Eine wesentliche Erweiterung der verwendbaren Materialien kann dadurch erreicht werden, daß andere Materialien mit schützenden Plattierungen versehen werden, z. B. mit Plattierungen aus den eben genannten oder ähnlich beständigen Materialien.

Bevorzugt werden nach der vorliegenden Erfindung zwei dieser Werkstoffe großflächig miteinander verlötet, wobei insbesondere ein Lot verwendet wird, dessen Erstarrungspunkt bei etwa 1050 °C oder darüber liegt.

Das Formverhalten einer so gelöteten Klappe kann dadurch beeinflußt werden, daß die verlöteten Metallschichten nach dem Löten kaltgewalzt werden, und zwar vorzugsweise in Richtung der längsten Ausdehnung der Klappe. Dadurch wird erreicht, daß sich die Klappe in Querrichtung unter Temperatureinfluß weniger stark wölbt als in Längsrichtung, was für manche Geometrien der Abgasrohre bei der Strömungsführung von Vorteil ist.

In besonderen Fällen kann zum Verlöten der Bimetallschichten auch ein Lot verwendet werden, welches mit den benachbarten Metallschichten auflegiert und so zu einer haltbaren Verbindung führt und dabei gleichzeitig eine Zwischenschicht erzeugt, die bezüglich der mechanischen Eigenschaften zwischen den Eigenschaften der beiden Metallschichten liegt. Wichtig ist hierbei insbesondere der thermische Ausdehnungskoeffizient der Zwischenschicht.

Ein weiterer ganz besonders wichtiger Punkt der vorliegenden Erfindung ist die Möglichkeit, Strömungsleitklappen auf der Ober- und/oder Unterseite mit Wärmeisolierschichten, z. B. aus keramischem Material, zu versehen. Durch solche Schichten kann das Biegeverhalten gegenüber dem Temperaturverlauf im Abgas verzögert werden, so daß sich ein größerer Spielraum für das Ansprechverhalten der Strömungsleitklappe ergibt. Wird die Isolierschicht auf der Seite der Klappe angebracht, die in kaltem Zustand dem Abgas ausgesetzt ist, so biegt sich die Klappe weniger schnell als ohne Isolierschicht, so daß sie beispielsweise eine Umgehungsleitung eines Startkatalysators erst verzögert freigibt. Ist andererseits die in heißem Zustand dem Abgas zugewandte Seite mit einer Wärmeisolierschicht versehen, so kann sie beispielsweise einen bei hohen Betriebstemperaturen durch die Klappe abgesperrten Katalysator vor Übertemperaturen schützen. Sind beide Seiten der Klappe mit einer Wärmeisolierschicht versehen, so biegt sie sich bei niedriger werdender Abgastemperatur oder Stillstand des Verbrennungsmotors nur langsam in ihre Kaltlage zurück, was bei bestimmten Systemen von Vorteil sein kann.

Durch verschiedenartige und/oder unterschiedlich dicke und/oder unterschiedlich auf der Strömungsleitklappe verteilte Wärmeisolierschichten können daher sehr verschiedene Bewegungsabläufe in Abhängigkeit von der Temperatur realisiert werden.

Für Strömungsleitklappen, die die Strömung in der Umgebung eines Katalysatorkörpers beeinflussen, kann es von besonderem Vorteil sein, die Strömungsleitklappe direkt am Mantelrohr eines Katalysatorkörpers zu befestigen. Wegen der Gleichartigkeit der dort üblicherweise vorkommenden Materialien ist eine Schweißverbindung problemlos zu bewerkstelligen.

Ausführungsbeispiele der Erfindung sind, zum Teil nur schematisch, in der Zeichnung dargestellt, und zwar zeigen:
Figur 1 einen Längsschnitt durch ein Gehäuse eines in Abhängigkeit von der Temperatur umgehbaren Startkatalysators,
Figur 2 die prinzipielle Form einer Strömungsleitklappe,
Figur 3 einen Querschnitt durch zwei raumsparend nebeneinander angeordnete Startkatalysator-Systeme mit Strömungsleitklappe,
Figur 4 einen Längsschnitt durch eine Strömungsleitklappe, mit keilförmigen Bimetallschichten,
Figur 5 einen Längsschnitt durch eine aus mehreren Bimetallstreifen gebildete Strömungsleitklappe,
Figur 6 einen schematischen Längsschnitt durch eine Anordnung einer in ihrem Schwerpunkt befestigten Strömungsleitklappe mit zwei frei beweglichen Enden,
Figuren 7 und 8 zwei Alternativen für den Aufbau einer Klappe gemäß Figur 5 im Querschnitt entlang der Linie VII/VIII - VII/VIII und
Figur 9 einen Querschnitt durch eine Startkatalysatoranordnung mit Andeutung des temperaturabhängigen Verhaltens einer erfindungsgemäß hergestellten Strömungsleitklappe aus gewalzten Bimetallstreifen.

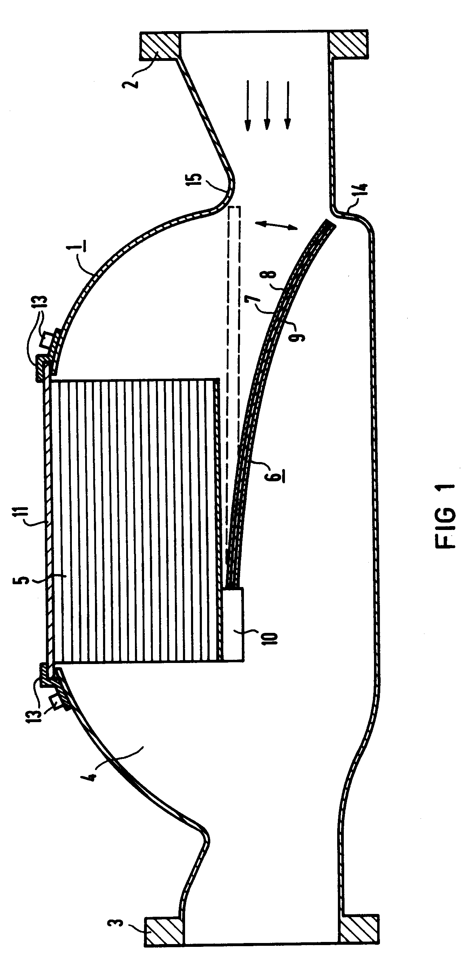

Figur 1 zeigt ein bauchiges Gehäuse 1 mit Flanschen 2, 3 an seinen beiden Enden. Der freie Querschnitt 4 im bauchigen Bereich des Gehäuses 1 ist nur teilweise von einem Katalysator-Trägerkörper 5 ausgefüllt. Dieser Katalysator-Trägerkörper 5 ist an einer Halteplatte 11 befestigt und weist ein Mantelrohr 12 auf. Das Gehäuse 1 hat in seinem oberen Bereich eine der Form des Katalysator-Trägerkörpers 5 entsprechende Öffnung, welche von der Halteplatte 11 wie mit einem Deckel verschlossen ist. Dabei wird die Halteplatte 11 durch Befestigungsmittel 13 gegenüber dem Gehäuse 1 fixiert. An dem Mantelrohr 12 des Katalysator-Trägerkörpers 5 ist mit einer Halterung 10 eine Strömungsleitklappe 6 befestigt, welche aus mindestens zwei Metallschichten 7, 8 mit unterschiedlichen thermischen Ausdehnungskoeffizienten besteht und ggf. noch mit einer Wärmeisolierschicht 9 versehen ist. Diese Strömungsleitklappe 6 befindet sich in kaltem Zustand in der dargestellten Position, so daß sie in Zusammenwirken mit einer Ausformung 14 des Gehäuses 1 das durch Pfeile angedeutete anströmende Abgas zum Katalysator-Trägerkörper 5 hin ablenkt. In kaltem Zustand wird daher der Katalysator-Trägerkörper vom größten Teil des Abgases durchströmt. Wärmt sich jedoch die Strömungsleitklappe 6 auf, so bewegt sie sich, wie durch einen Pfeil angedeutet, in die gestrichelt gezeichnete Position. Im Zusammenwirken mit der Form 15 an der Einlaßseite des Gehäuses, hinter welcher das Ende der Strömungsleitklappe 6 sich der Strömung entzieht, wird so der Katalysator-Trägerkörper 5 weitestgehend vor heißem Abgas abgeschirmt. Dabei ist der Katalysator-Trägerkörper 5 zusammen mit der Strömungsleitklappe 6 auswechselbar.

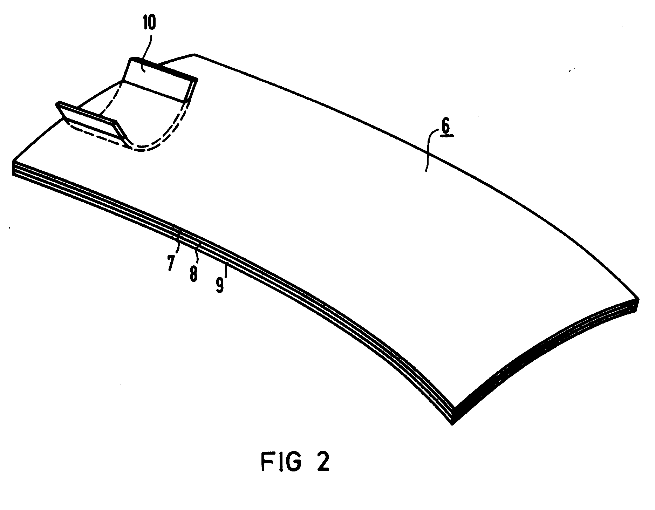

Figur 2 zeigt in schematischer, perspektivischer Darstellung die Form einer Strömungsleitklappe 6. Diese besteht aus einer metallischen Schicht 7 mit niedrigerem Ausdehnungskoeffizienten, vorzugsweise einem Ferrit, und einer Schicht 8 mit höherem thermischen Ausdehnungskoeffizienten, vorzugsweise einem Austenit. Beide Schichten sind großflächig, vorzugsweise über die gesamten Flächen miteinander verlötet. Eine keramische Wärmeisolierschicht 9 kann auf der Unterseite und/oder auch auf der Oberseite der Klappe 6 vorgesehen sein. An einer Schmalseite ist die Klappe durch zwei Schlitze von einem Ringsegment 10 durchdrungen und mit diesem fügetechnisch verbunden, wodurch sich ein einfaches Befestigungsmittel für die Anbindung der Strömungsleitklappe 6 an einem Gehäuse oder dem Mantelrohr eines Katalysator-Trägerkörpers ergibt.

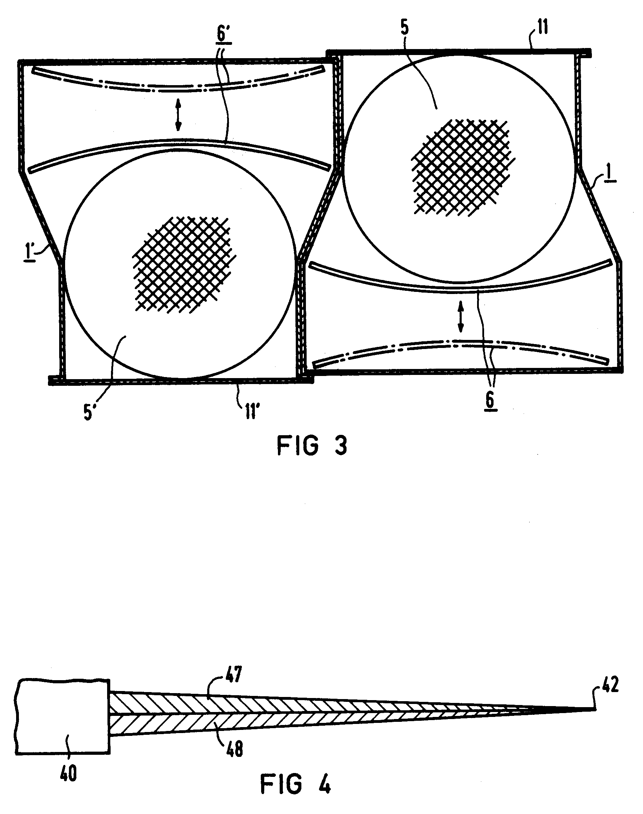

Figur 3 zeigt in stark schematisierter Form einen Querschnitt durch zwei nebeneinander angeordnete Gehäuse 1, 1′, wie sie im Längsschnitt in Figur 1 gezeigt wurden. Die um 180° versetzte Anordnung solcher Gehäuse nebeneinander ist äußerst raumsparend und kann daher auch im motornahen Bereich angewendet werden. Das Ausführungsbeispiel gemäß Figur 3 geht ebenfalls von flächig verlöteten Bimetallklappen 6, 6′ aus, welche in ihren beiden Extremstellungen jeweils sphärisch bzw. ellipsoidisch geformt sind, so daß sich günstige Strömungsleiteigenschaften ergeben.

Eine erfindungsmäße Bimetallklappe ist in Figur 4 dargestellt. An einer Halterung 40 sind zwei zu ihrem Ende 42 in der Dicke abnehmende Metallschichten 47, 48 befestigt, welche unterschiedliche thermische Ausdehnungskoeffizienten haben. Eine so geformte Bimetallklappe nimmt in Abhängigkeit von der Temperatur eine von der Halterung 40 bis zur Spitze 42 zunehmend gekrümmte Form an.

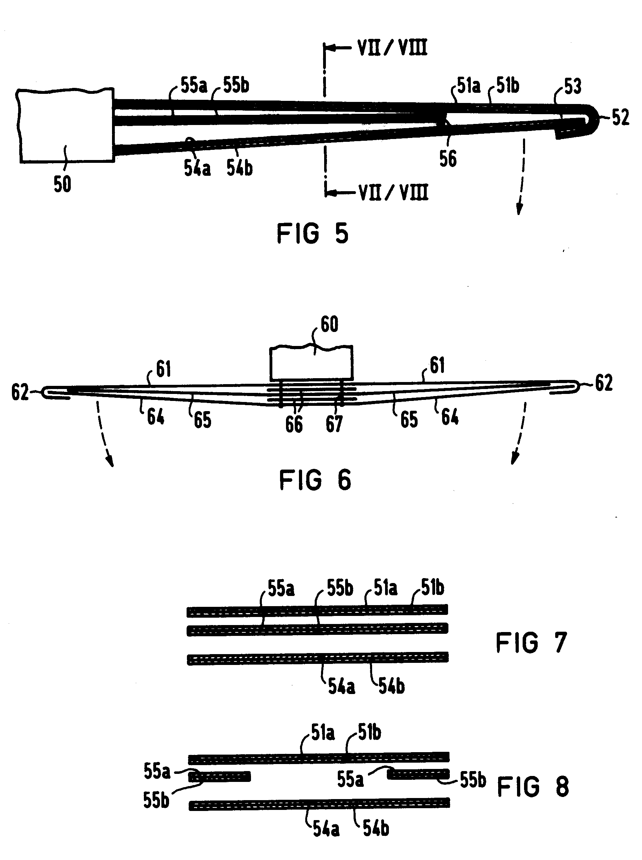

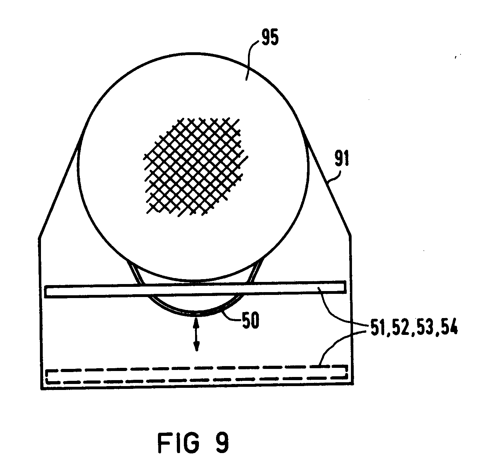

Figur 5 zeigt in leicht schematisierter Darstellung eine mehrschichtige Strömungsleitklappe mit keilförmigem Längsschnitt. An einer Halterung 50 sind ein Bimetall-Unterstreifen 51a, 51b und ein Bimetall-Unterstreifen 54a, 54b befestigt, welche zum freien Ende 52 hin aufeinander zulaufen. Das Ende 52 des Bimetall-Oberstreifens 51a, 51b ist um das freie Ende des Bimetall-Unterstreifens 54a, 54b gebogen, so daß sich ein Schiebesitz 53 ergibt, welcher die beiden Streifen zwar in einer stabilen Konstellation hält, jedoch eine Verschiebung gegeneinander unter dem Einfluß von Temperaturänderungen zuläßt. Zusätzlich kann die beschriebene Anordnung noch durch einen oder mehrere Bimetall-Mittelstreifen 55a, 55b verstärkt sein, welche im Inneren der keilförmigen Anordnung liegen. Das, ggf. verstärkte, Ende 46 des Bimetall-Mittelstreifens sollte an einem oder beiden äußeren Streifen anliegen. Eine Strömungsleitklappe gemäß Figur 5 ist trotz eines großen Biegeweges sehr steif und wenig anfällig für Schwingungen. Querschnitte durch diese Anordnung sind in den Figuren 7 und 8 dargestellt, wobei sich diese beiden Figuren nur dadurch unterscheiden, daß der Bimetall-Mittelstreifen 55a, 55b in Figur 7 die gleiche Breite wie die beiden anderen Bimetallstreifen hat, während in Figur 8 eine Variante dargestellt ist, bei der der Bimetall-Mittelstreifen 55a, 55b aus zwei mit Abstand nebeneinanderliegenden Bimetallstreifen besteht.

Figur 6 zeigt eine doppelseitige Bimetallklappe, wobei beide Seiten im Prinzip so aufgebaut sind, wie in Figur 5 im einzelnen dargestellt ist. Die rechte Hälfte der Figur 6 entspricht in allen wesentlichen Punkten der Figur 5, und die linke Hälfte der Figur 6 ist spiegelsymmetrisch zur rechten Hälfte aufgebaut. Zweckmäßiger- aber nicht notwendigerweise ist die doppelseitige Strömungsleitklappe der Figur 6 aus einem durchgehenden Bimetall-Oberstreifen 61 und einem durchgehenden Bimetall-Unterstreifen 64 aufgebaut, welche an ihren Enden den schon beschriebenen Schiebesitz 62 aufweisen. Auch ein durchgehender Bimetall-Mittelstreifen 65 kann vorhanden sein. Gegenüber einer Anordnung nach Figur 5 muß ggf. die Halterung 60 modifiziert werden, beispielsweise indem im Bereich der Halterung 60 weitere Bimetallstreifen 66 zwischen Oberstreifen 61, Mittelstreifen 65 und Unterstreifen 64 gelegt werden, um die gewünschte Keilform beider Enden zu erreichen. Fixiert werden können die einzelnen Bimetallstreifen an der Halterung 60 beispielsweise durch Befestigungsstifte 67, ggf. auch durch Klammern oder dergleichen. Eine doppelseitige Strömungsleitklappe kann beispielsweise dazu verwendet werden, die Strömungsführung in zweisträngigen Abgasanlagen zu beeinflussen oder aber auch um einen Startkatalysator an seiner Vorder- und seiner Rückseite nach einer Anlaufzeit vom Abgasstrom abzutrennen.

Der Vollständigkeit halber ist in Figur 9 noch dargestellt, wie sich eine Strömungsleitklappe 51, 52, 53, 54 in einem Gehäuse 91 verhält, wenn sie durch ihre Bearbeitung oder konstruktive Einzelheiten unter Temperatureinfluß fast keine Wölbung in Querrichtung, sondern nur eine Wölbung in Längsrichtung erfährt. Dies läßt sich beispielsweise durch Walzen aneinandergelöteter Metallschichten erreichen oder durch eine nicht über die ganze Fläche der Schichten gehende Verlötung. In kaltem Zustand befindet sich die Strömungsleitklappe in der gestrichelten Position und erreicht bei Maximaltemperatur die obere Lage, in welcher nur noch der untere Teil des Gehäuses 91 von Abgas durchströmt wird und der Katalysatorkörper 95 abgeschirmt wird.

Erfindungsgemäße Strömungsleitklappen bieten die Möglichkeit, über lange Zeit den extremen Bedingungen in Abgassystemen von Kraftfahrzeugen, insbesondere bei motornahem Einbau, Stand zu halten, und erlauben damit auch den motornahen Einbau von Startkatalysatoren, die bei höherer Abgastemperatur umgangen und geschützt werden müssen. Dies eröffnet die Möglichkeit, den Schadstoffausstoß von Kraftfahrzeugen schon in der Kaltstartphase zu verringern, ohne beim Dauerbetrieb Nachteile in Kauf zu nehmen.

## Patentansprüche

1. Strömungsleitklappe (6; 46; 51 bis 56; 61 bis 66; 107, 108), insbesondere für Abgassysteme von Kraftfahrzeugen, enthaltend mindestens zwei Schichten (7, 8; 47, 48a, 48b, 48c, 51a, 51b, 54a, 54b, 55a, 55b; 61, 64, 65, 66; 107, 108) von Metallen mit unterschiedlichen Wärmeausdehnungskoeffizienten, mit folgenden Merkmalen:
a) eine langgestreckte Form;
b) Befestigungsmittel (10; 50; 60, 67; 100) nur an einer Schmalseite oder nur etwa im Bereich ihres Schwerpunktes;
c) eine im Längsschnitt von den Befestigungsmitteln (10; 50; 60, 67; 100) zu dem (bzw. den) Ende(n) (52; 102; bzw. 62) hin abnehmende Dicke.

2. Strömungsleitklappe nach Anspruch 1, **dadurch gekennzeichnet,** daß die Klappe (6) etwa die Form eines Rechtecks oder Trapezes aufweist.

3. Strömungsleitklappe nach Anspruch 1 oder 2, **dadurch gekennzeichnet,** daß die Klappe (6) eine Länge von mehr als 6 cm und eine Breite von mehr als 3 cm hat.

4. Strömungsleitklappe nach einem der Ansprüche 1, 2 oder 3, **dadurch gekennzeichnet,** daß die Klappe aus mindestens zwei Bimetallstreifen (51a, 51b, 54a, 54b; 61, 64) besteht, nämlich mindestens einem Oberstreifen (51a, 51b; 61) und mindestens einem Unterstreifen (54a, 54b; 64), welche von den Befestigungsmitteln (50; 60; 67) aus zu dem (bzw. den) Ende(n) (52 bzw. 62) hin keilförmig aufeinander zulaufen.

5. Strömungsleitklappe nach einem der Ansprüche 1, 2 oder 3, **dadurch gekennzeichnet,** daß die Klappe mindestens zwei Metallschichten (107, 108) aufweist, welche von den Befestigungsmitteln (100) aus zu dem (bzw. den) Ende(n) (102) hin eine abnehmende Dicke aufweisen.

6. Strömungsleitklappe nach einem der vorhergehenden Ansprüche, **dadurch gekennzeichnet,** daß die Klappe (46; 51-56; 61-66) durch einen oder mehrere zusätzliche(n) Bimetallstreifen (48a, 48b, 48c; 55a, 55b; 65) verstärkt ist.

7. Strömungsleitklappe nach Anspruch 6, **dadurch gekennzeichnet,** daß der (bzw. die) zusätzliche(n) Bimetallstreifen (55a, 55b; 65) zwischen einem Oberstreifen (51a, 51b; 61) und einem Unterstreifen (54a, 54b; 64) angeordnet ist (bzw. sind).

8. Strömungsleitklappe nach Anspruch 4, 5, 6 oder 7, **dadurch gekennzeichnet,** daß der Oberstreifen (51a, 51b; 61) an seinem (bzw. seinen) freien Ende(n) (52; 62) um den Unterstreifen (54a, 54b; 64) gebogen ist oder umgekehrt, so daß jeweils eine Schiebeverbindung (53) zwischen Ober- und Unterstreifen entsteht, die temperaturbedingte relative Verschiebungen von Oberstreifen (51a, 51b; 61) und Unterstreifen (54a, 54b; 64) zuläßt.

9. Strömungsleitklappe nach einem der vorhergehenden Ansprüche, **dadurch gekennzeichnet,** daß die Klappe (6; 46; 51-56; 61-66) zumindest in einem vorgegebenen Temperaturbereich nahezu eben ist.

10. Strömungsleitklappe nach einem der vorhergehenden Ansprüche, **dadurch gekennzeichnet,** daß die Zug- und Druckspannungen in den Metallschichten (7, 8; 51a, 51b, 54a, 54b, 55a, 55b) der Klappe bei niedriger Temperatur, z. B. 20 °C ihren höchsten Wert und bei hoher Temperatur, z. B. 800 °C bis 1000 °C, ihren niedrigsten Wert haben, vorzugsweise bei maximaler Betriebstemperatur etwa Null sind.

11. Strömungsleitklappe nach einem der vorhergehenden Ansprüche, **dadurch gekennzeichnet,** daß die Metalle, aus denen die Klappe besteht, mindestens ein Austenit, vorzugsweise X 15 CrNiSi 20 12, und ein Ferrit bzw. Ferrit-Austenit, vorzugsweise X 10 CrAl 18 bzw. X 20 CrNiSi 25 4, sind.

12. Strömungsleitklappe nach Anspruch 11, **dadurch gekennzeichnet,** daß der Ferrit bzw. Ferrit-Austenit im gesamten Temperaturbereich von etwa 0 °C bis etwa 1000 °C unter Druckspannung steht und bei Maximaltemperatur, z. B. 1050 °C fast spannungsfrei ist.

13. Strömungsleitklappe nach einem der vorhergehenden Ansprüche, **dadurch gekennzeichnet,** daß die Metallschichten (7, 8; 51a, 51b; 54a, 54b; 55a, 55b; 107, 108) aus verschiedenen Metallen zumindest teilweise und/oder in Teilbereichen zur Bildung von Bimetallstreifen (7, 8; 51a, 51b; 54a, 54b; 55a, 55b; 61; 64; 65; 66; 107, 108; 47; 48a; 48b; 48c) großflächig miteinander verlötet sind.

14. Strömungsleitklappe nach Anspruch 13, **dadurch gekennzeichnet,** daß die verlöteten Metallschichten nach dem Löten kalt gewalzt sind, und zwar vorzugsweise in Richtung der längsten Ausdehnung der Klappe.

15. Strömungsleitklappe nach Anspruch 13 oder 14, **dadurch gekennzeichnet,** daß das zum Verlöten verwendete Lot einen Erstarrungspunkt oberhalb der maximalen Einsatztemperatur der Klappe, z. B. oberhalb von etwa 1050 °C hat.

16. Strömungsleitklappe nach Anspruch 13, 14 oder 15, **dadurch gekennzeichnet,** daß das Lot mit den beiden verlöteten Metallschichten auflegiert ist zu einer Zwischenschicht, die bzgl. der mechanischen Eigenschaften zwischen den Eigenschaften der beiden Metallschichten liegt.

17. Strömungsleitklappe nach einem der vorhergehenden Ansprüche, **dadurch gekennzeichnet,** daß die Außenseiten der Bimetallschichten mit hochtemperaturkorrosionsfesten Legierungen beschichtet bzw. plattiert sind.

18. Strömungsleitklappe nach einem der vorhergehenden Ansprüche, **dadurch gekennzeichnet,** daß die Klappe (6) auf ihrer Ober- und/oder Unterseite zumindest in Teilbereichen mit mindestens einer Wärmeisolierschicht (9) versehen ist.

19. Strömungsleitklappe nach Anspruch 18, **dadurch gekennzeichnet,** daß Ober- und Unterseite verschiedenartige und/oder unterschiedlich dicke und/oder unterschiedlich verteilte Wärmeisolierschichten aufweisen.

20. Strömungsleitklappe nach einem der vorhergehenden Ansprüche, **dadurch gekennzeichnet,** daß die Klappe (6) am Mantelrohr eines Katalysatorkörpers (5), vorzugsweise am abströmseitigen Ende des Katalysatorkörpers, befestigt (10) ist und entgegen der Strömungsrichtung zeigt.

21. Verwendung einer Strömungsleitklappe (6) nach einem der Ansprüche 1 bis 20 zur Beeinflussung der Strömung in Abgassystemen, z. B. von Verbrennungsmotoren, in Abhängigkeit von der Temperatur.

22. Verwendung nach Anspruch 21, wobei die Strömungsleitklappe (6) zur Leitung der Abgasströmung durch einen Katalysatorkörper (5) bei niedriger Temperatur und zur Umleitung und Abschirmung des Katalysatorkörpers (5) bei hoher Temperatur dient.

## Claims

1. A flow guide flap (6; 46; 51 to 56; 61 to 66; 107, 108), in particular for exhaust gas systems of motor vehicles, including at least two layers (7, 8; 47, 48a, 48b, 48c, 51a, 51b, 54a, 54b, 55a, 55b; 61, 64, 65, 66; 107, 108) of metals with different coefficients of thermal expansion, having the following features:
a) an elongate shape;
b) fixing means (10; 50; 60, 67; 100) only at a narrow side or only approximately in the region of its centre of gravity; and
c) a thickness which decreases in longitudinal section from the fixing means (10; 50; 60, 67; 100) to the end or ends (52; 102; or 62).

2. A flow guide flap according to claim 1 characterised in that the flap (6) is approximately in the shape of a rectangle or a trapezium.

3. A flow guide flap according to claim 1 or claim 2 characterised in that the flap (6) is of a length of more than 6 cm and a width of more than 3 cm.

4. A flow guide flap according to one of claims 1, 2 and 3 characterised in that the flap comprises at least two bimetal strips (51a, 51b, 54a, 54b; 61, 64), namely at least one upper strip (51a, 51b; 61) and at least one lower strip (54a, 54b; 64) which converge in a wedge-like configuration from the fixing means (50; 60; 67) to the end or ends (52 or 62).

5. A flow guide flap according to one of claims 1, 2 and 3 characterised in that the flap has at least two metal layers (107, 108) which are of a decreasing thickness from the fixing means (100) to the end or ends (102).

6. A flow guide flap according to one of the preceding claims characterised in that the flap (46; 51-56; 61-66) is reinforced by one or more additional bimetal strips (48a, 48b, 48c; 55a, 55b; 65).

7. A flow guide flap according to claim 6 characterised in that the additional bimetal strip or strips (55a, 55b; 65) is or are arranged between an upper strip (51a, 51b; 61) and a lower strip (54a, 54b; 64).

8. A flow guide flap according to claim 4, claim 5, claim 6 or claim 7 characterised in that at its free end or ends (52; 62) the upper strip (51a, 51b; 61) is bent around the lower strip (54a, 54b; 64) or vice-versa, thus providing a sliding connection (53) between the upper and lower strips, which permits temperature-governed relative displacements of the upper strip (51a, 51b; 61) and the lower strip (54a, 54b; 64).

9. A flow guide flap according to one of the preceding claims characterised in that the flap (6; 46; 51-56; 61-66) is almost flat at least in a predetermined temperature range.

10. A flow guide flap according to one of the preceding claims characterised in that the tensile and compression stresses in the metal layers (7, 8; 51a, 51b, 54a, 54b, 55a, 55b) of the flap are at their highest value at low temperature, for example 20°C, and at their lowest value at high temperature, for example 800°C to 1000°C, preferably being approximately zero at maximum operating temperature.

11. A flow guide flap according to one of the preceding claims characterised in that the metals of which the flap consists are at least an austenite, preferably X 15 CrNiSi 20 12, and a ferrite or ferrite-austenite, preferably X 10 CrAl 18 or X 20 CrNiSi 25 4.

12. A flow guide flap according to claim 11 characterised in that the ferrite or ferrite-austenite is under a compression stress in the entire temperature range of from about 0°C to about 1000°C and is almost stress-free at maximum temperature, for example 1050°C.

13. A flow guide flap according to one of the preceding claims characterised in that the metal layers (7, 8; 51a, 51b; 54a, 54b; 55a, 55b; 107, 108) of different metals are soldered together over a large area at least in part and/or in partial regions to form bimetal strips (7, 8; 51a, 51b; 54a, 54b; 55a, 55b; 61; 64; 65; 66; 107, 108; 47; 48a; 48b; 48c).

14. A flow guide flap according to claim 13 characterised in that the soldered metal layers are cold-rolled after the soldering operation, are specifically preferably in the direction of the longest extent of the flap.

15. A flow guide flap according to claim 13 or claim 14 characterised in that the solder used for the soldering operation has a solidification point above the maximum temperature of use of the flap, for example above about 1050°C.

16. A flow guide flap according to claim 13, claim 14 or claim 15 characterised in that the solder is alloyed with the two soldered metal layers to provide an intermediate layer which in term of the mechanical properties is between the properties of the two metal layers.

17. A flow guide flap according to one of the preceding claims characterised in that the outsides of the bimetal layers are plated or coated with alloys which are resistant to high-temperature corrosion.

18. A flow guide flap according to one of the preceding claims characterised in that the flap (6) is provided with at least one heat insulating layer (9) on its top and/or bottom side at least in partial regions thereof.

19. A flow guide flap according to claim 18 characterised in that the top and bottom side have different heat insulating layers and/or heat insulating layers of different thicknesses and/or differently distributed heat insulating layers.

20. A flow guide flap according to one of the preceding claims characterised in that the flap (6) is fixed (10) to the casing tube of a catalyst body (5), preferably at the downstream end of the catalyst body, and faces in opposite relationship to the direction of flow.

21. Use of a flow guide flap (6) according to one of claims 1 to 20 for influencing the flow in exhaust gas systems, for example of internal combustion engines, in dependence on temperature.

22. Use according to claim 21 wherein the flow guide flap (6) serves to guide the exhaust gas flow through a catalyst body (5) at low temperature and to divert it and protect the catalyst body (5) at high temperature.

## Revendications

1. Un volet de guidage d'écoulement (6 ; 46 ; 51 à 56 ; 61 à 66 ; 107, 108), en particulier pour un système d'échappement de véhicules à moteur, comprenant au moins deux couches (7, 8 ; 47, 48a, 48b, 48c, 51a, 51b, 54a, 54b, 55a, 55b ; 61, 64, 65, 66 ; 107, 108) de métaux présentant des coefficients de dilatation thermique différents, avec les caractéristiques suivantes :
a) une forme allongée ;
b) des moyens de fixation (10 ; 50 ; 60, 67 ; 100) situés seulement sur un côté étroit ou seulement approximativement dans la région de son centre de gravité ; et
c) une épaisseur qui, en section longitudinale, va décroissant depuis les moyens de fixation (10 ; 50 ; 60, 67 ; 100) jusqu'à l'extrémité (52 ; 102), ou jusqu'aux extrémités (62).

2. Le volet de guidage d'écoulement de la revendication 1, caractérisé en ce que le volet (6) a la forme approximative d'un rectangle ou d'un trapèze.

3. Le volet de guidage d'écoulement de la revendication 1 ou 2, caractérisé en ce que le volet (6) a une longueur de plus de 6 cm et une largeur de plus de 3 cm.

4. Le volet de guidage d'écoulement de l'une des revendications 1, 2 ou 3, caractérisé en ce que le volet comporte au moins deux lames bimétalliques (51a, 51b, 54a, 54b ; 61, 64), à savoir au moins une lame supérieure (51a, 51b ; 61) et au moins une lame inférieure (54a, 54b ; 64) qui s'étendent depuis les moyens de fixation (50 ; 60 ; 67) jusqu'à l'extrémité (52), ou jusqu'aux extrémités (62), en formant un coin l'une avec l'autre.

5. Le volet de guidage d'écoulement de l'une des revendications 1, 2 ou 3, caractérisé en ce que le volet comporte au moins deux couches métalliques (107, 108), qui présentent une épaisseur qui va décroissant des moyens de fixation (100) jusqu'à l'extrémité (102), ou jusqu'aux extrémités.

6. Le volet de guidage d'écoulement de l'une des revendications précédentes, caractérisé en ce que le volet (46 ; 51 à 56 ; 61 à 66) est renforcé par une ou plusieurs lames bimétalliques additionnelles (48a, 48b, 48c ; 55a, 55b ; 65).

7. Le volet de guidage d'écoulement de la revendication 6, caractérisé en ce que la lame bimétallique additionnelle (65), ou les lames bimétalliques additionnelles (55a, 55b), est (sont) disposée(s) entre une lame supérieure (51a, 51b ; 61) et une lame inférieure (54a, 54b ; 64).

8. Le volet de guidage d'écoulement de la revendication 4, 5, 6 ou 7, caractérisé en ce que la lame supérieure (51a, 51b ; 61) est courbée ou retournée à son extrémité libre ou à ses extrémités libres (52 ; 62) autour de la lame inférieure (54a, 54b ; 64), de manière à former, entre lame supérieure et lame inférieure, une liaison respective entre couches (53) qui autorise un décalage relatif en fonction de la température entre la lame supérieure (51a, 51b ; 61) et la lame inférieure (54a, 54b ; 64).

9. Le volet de guidage d'écoulement de l'une des revendications précédentes, caractérisé en ce que le volet (6 ; 46 ; 51-56 ; 61-66) est, au moins à l'intérieur d'une plage de température prédéterminée, approximativement plan.

10. Le volet de guidage d'écoulement de l'une des revendications précédentes, caractérisé en ce que les contraintes de traction et de compression dans les couches métalliques (7, 8 ; 51a, 51b, 54a, 54b, 55a, 55b) du volet présentent les valeurs les plus élevées pour les températures les plus faibles, par exemple 20°C, et les valeurs les plus faibles pour les températures les plus élevées, par exemple 800°C à 1000°C, en étant avantageusement approximativement nulles pour la température maximale de fonctionnement.

11. Le volet de guidage d'écoulement de l'une des revendications principales, caractérisé en ce que les métaux qui constituent le volet comportent au moins un acier austénitique, avantageusement un X 15 CrNiSi 20 12, et un acier ferritique ou ferritique-austénitique, avantageusement un X 10 CrAl 18 ou un X 20 CrNiSi 25 4.

12. Le volet de guidage d'écoulement de la revendication 1, caractérisé en ce que l'acier ferritique ou ferritique-austénitique reste sous contrainte de compression sur l'ensemble de la plage de température comprise entre environ 0°C et environ 1000°C, et est pratiquement sans contrainte à la température maximale, par exemple 1050°C.

13. Le volet de guidage d'écoulement de l'une des revendications précédentes, caractérisé en ce que les couches métalliques (7, 8 ; 51a, 51b ; 54a, 54b ; 55a, 55b ; 107, 108) en métaux différents sont soudées entre elles en grande surface au moins partiellement et/ou dans des portions de leur étendue pour constituer les lames bimétalliques (7, 8 ; 51a, 51b ; 54a, 54b ; 55a, 55b ; 61 ; 64 ; 65 ; 66 ; 107, 108 ; 47 ; 48a ; 48b ; 48c).

14. Le volet de guidage d'écoulement de la revendication 13, caractérisé en ce que les couches métalliques soudées sont laminées à froid après soudure, avantageusement dans la direction de la plus grande dimension du volet.

15. Le volet de guidage d'écoulement de la revendication 13 ou 14, caractérisé en ce que la soudure utilisée pour le soudage présente un point de solidification supérieure à la température maximale d'utilisation du volet, par exemple supérieur à environ 1050°C.

16. Le volet de guidage d'écoulement de la revendication 13, 14 ou 15, caractérisé en ce que la soudure est alliée aux deux couches métalliques soudées pour constituer une couche intermédiaire ayant des propriétés mécaniques intermédiaires entre celles des deux couches métalliques.

17. Le volet de guidage d'écoulement de l'une des revendications précédentes, caractérisé en ce que la face extérieure des lames bimétalliques est revêtue ou plaquée d'un revêtement résistant à la corrosion à haute température.

18. Le volet de guidage d'écoulement de l'une des revendications précédentes, caractérisé en ce que le volet (6) est pourvu d'au moins une couche d'isolation thermique (9) sur sa face supérieure et/ou sa face intérieure au moins dans des portions de leur étendue.

19. Le volet de guidage d'écoulement de la revendication 18, caractérisé en ce que la surface supérieure et la surface inférieure comportent des couches d'isolation thermique de natures différentes et/ou d'épaisseurs différentes et/ou réparties différemment.

20. Le volet de guidage d'écoulement de l'une des revendications précédentes, caractérisé en ce que le volet (6) est fixé (10) au manchon tubulaire d'un corps de catalyseur (5), avantageusement à l'extrémité d'échappement du corps de catalyseur.

21. Utilisation d'un volet de guidage d'écoulement (6) selon l'une des revendications 1 à 20 pour agir sur l'écoulement d'un système d'échappement gazeux, par exemple d'un moteur à combustion interne, en fonction de la température.

22. Utilisation selon la revendication 21, dans laquelle le volet de guidage d'écoulement (6) sert, aux températures les plus faibles, à guider le courant d'échappement au travers d'un corps de catalyseur (5) et, aux températures les plus élevées, à dévier et protéger le corps de catalyseur (5).
